# EUROPÄISCHE PATENTSCHRIFT

(11) **EP 2 995 360 B1**
(45) Veröffentlichungstag und Bekanntmachung des Hinweises auf die Patenterteilung: **15.06.2022**
(21) Anmeldenummer: 14003165.9
(22) Anmeldetag: 12.09.2014
(51) Int. Cl.: B01D 46/00

(54) **Filterelement**
Filter element
Élément de filtre

(43) Veröffentlichungstag der Anmeldung: 16.03.2016
(73) Patentinhaber: Carl Freudenberg KG, 69469 Weinheim (DE)
(72) Erfinder: Sieh, Maik, 69207 Sandhausen (DE); Sonn, Siegfried, 69502 Hemsbach (DE); Klaus, Jürgen, 69502 Hemsbach (DE); Becker, Jürgen, 67378 Zeiskam (DE); Beck, Günther, 68623 Lampertheim (DE)

(56) Entgegenhaltungen:
- EP-A1- 1 208 902
- CA-A- 802 008
- DE-A1- 4 004 343
- DE-A1- 19 700 340
- US-A- 5 395 429

## Beschreibung

### Technisches Gebiet

Die Erfindung betrifft ein Filterelement nach dem Oberbegriff des Patentanspruchs 1.

### Stand der Technik

Aus dem Stand der Technik sind Kassettenfilter für Hochtemperaturanwendungen bekannt, die Blechrahmen oder Aluminiumprofilrahmen aufweisen.

Zur Abdichtung der Filterkassetten gegen eine Aufnahmewand in einer Filteranlage werden derzeit Glaskordeldichtungen eingesetzt. Die Glaskordeldichtungen werden auf die Filterkassette aufgeklebt.

Nach längerem Einsatz der Filterkassetten bei höheren Temperaturen, insbesondere bei Temperaturen, die höher als 150 °C sind, kann sich die Klebeverbindung auflösen.

Des Weiteren ist das Auftragen des Klebstoffs bei der Fertigung der Filterkassetten relativ aufwendig.

CA 802008 A zeigt ein Filterelement, umfassend einen Rahmen, dem eine Dichtung zugeordnet ist, wobei dem Rahmen eine Aufnahme zugeordnet ist, in welcher die Dichtung formschlüssig aufgenommen und fixiert ist. Eine vergleichbare Ausgestaltung ist aus der DE 40 04 343 A1 und der EP 1 208 902 A1 bekannt.

### Darstellung der Erfindung

Der Erfindung liegt vor diesem Hintergrund die Aufgabe zu Grunde, ein Filterelement anzugeben, bei dem eine möglichst dauerhafte Verbindung zwischen einer Dichtung und dem Rahmen des Filterelements besteht.

Erfindungsgemäß wird die voranstehende Aufgabe mit den Merkmalen des Patentanspruchs 1 gelöst.

Erfindungsgemäß ist zunächst erkannt worden, dass eine Klebeverbindung zwischen einer Dichtung und einem Rahmen einer Filterkassette bei hohen Temperaturen nicht dauerhaft stabil ist. Insoweit kann die Filterkassette beim Dauereinsatz unter hohen Temperaturen nicht mehr ausreichend dicht an einer Aufnahmewand anliegen. Erfindungsgemäß ist weiter erkannt worden, dass durch eine formschlüssige Aufnahme der Dichtung eine mechanische Verbindung zwischen der Dichtung und dem Rahmen gegeben ist. Überraschend hält diese Verbindung dauerhaft auch höheren Temperaturen stand. Insoweit ist ein Filterelement angegeben, bei dem eine möglichst dauerhafte Verbindung zwischen einer Dichtung und dem Rahmen des Filterelements besteht, wobei die Verbindung einfach herstellbar ist.

Der Profilstrang ist als Kederschiene ausgebildet, in welcher die Dichtung aufgenommen ist. Eine Kederschiene ermöglicht einen bewährten formschlüssigen Verbund.

Das Filterelement ist als Kassettenfilter ausgestaltet. Kassettenfilter können in Umgebungen eingesetzt werden, in denen hohe Temperaturen herrschen. Der Profilstrang mit Aufnahme, nämlich die Kederschiene, wird zum Bau von Kassettenfiltern für Hochtemperaturanwendungen eingesetzt. Ein Einsatzgebiet dieser Kassettenfilter ist die Luftfiltration im Temperaturbereich größer 100 °C bis maximal 385 °C. Konkret ist eine Verwendung in Lacktrocknungsprozessen der Automobil-Industrie denkbar.

Die Aufnahme ist erfindungsgemäß in einem Profilstrang ausgebildet, der den Rahmen bildet. Ein Profilstrang ist kostengünstig herstellbar und ist in einer Vielzahl von Dimensionen herstellbar.

Die Dichtung könnte als Strang ausgebildet sein, der formschlüssig in der Aufnahme aufgenommen ist. Einem Strang, beispielsweise einer Glaskordel, kann leicht ein gewisses Profil aufgeprägt werden.

Die Aufnahme für die Dichtung könnte roh- und/ oder reingasseitig angeordnet sein. Dies ermöglicht verschiedene Einbauvarianten.

Kurzbeschreibung der Zeichnung In der Zeichnung zeigen
- Fig. 1: eine Schnittansicht eines Profilstrangs und eine perspektivische Ansicht der Dichtung,
- Fig. 2: eine Schnittansicht des Profilstrangs gemäß Fig. 1 mit formschlüssig aufgenommener Dichtung,
- Fig. 3: eine perspektivische Ansicht des Profilstrangs gemäß Fig. 2 mit formschlüssig aufgenommener Dichtung, und
- Fig. 4: ein Filterelement mit einem Rahmen, in dem die Dichtung aufgenommen ist.

### Ausführung der Erfindung

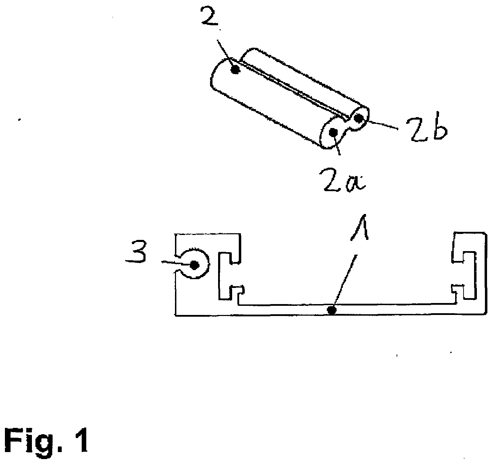

Fig. 1 zeigt eine Schnittansicht eines Profilstrangs 1 und eine perspektivische Ansicht einer Dichtung 2. Die Dichtung 2 ist als Strang ausgebildet, der formschlüssig in einer Aufnahme 3 aufnehmbar ist. Der Profilstrang 1 ist als Kederschiene ausgebildet.

Der Strang weist zwei zumindest teilweise zylindrische Abschnitte 2a, 2b auf, von denen einer in der Aufnahme 3 formschlüssig aufnehmbar ist, wobei der andere dichtend an einer nicht gezeigten Aufnahmewand einer Filteranlage anliegt.

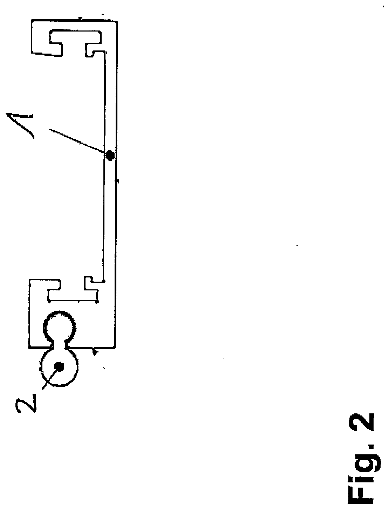

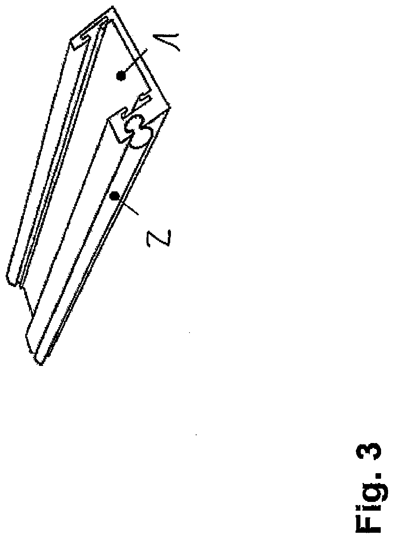

Fig. 2 zeigt eine Schnittansicht des Profilstrangs 1 gemäß Fig. 1 mit formschlüssig aufgenommener Dichtung 2. Fig. 3 zeigt eine perspektivische Ansicht des Profilstrangs 1 gemäß Fig. 2 mit formschlüssig aufgenommener Dichtung 2.

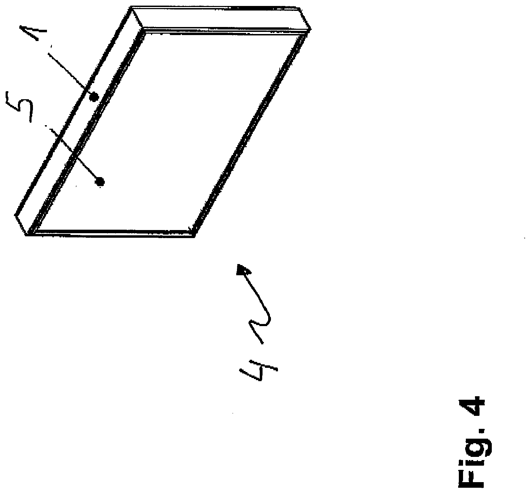

Fig. 4 zeigt ein Filterelement 4, umfassend einen Rahmen, der als Profilstrang 1 ausgebildet ist, wobei dem Rahmen eine Dichtung 2 zugeordnet ist. Dem Rahmen, nämlich dem Profilstrang 1, ist eine Aufnahme 3 zugeordnet, in welcher die Dichtung 2 formschlüssig aufgenommen und fixiert ist. Dies ist in den Fig. 1 bis 3 gezeigt.

Die Aufnahme 3 ist in einem Profilstrang 1 ausgebildet, der den Rahmen bildet. Der Profilstrang 1 ist als Kederschiene aus Aluminium ausgebildet, in welcher die Dichtung 2 aufgenommen ist.

Die Dichtung 2 ist als Strang ausgebildet, der formschlüssig in der Aufnahme 3 aufgenommen ist.

Die Aufnahme 3 für die Dichtung 2 ist reingasseitig angeordnet.

Das Filterelement 4 weist einen Faltenbalg 5 auf, der vom Rahmen umgeben ist.

## Patentansprüche

1. Filterelement (4) ausgestaltet als Kassettenfilter für Hochtemperaturanwendungen für die Luftfiltration in einem Temperaturbereich von größer 100°C bis maximal 385°C, umfassend einen Rahmen, dem eine Dichtung (2) zugeordnet ist, wobei dem Rahmen eine Aufnahme (3) zugeordnet ist, in welcher die Dichtung (2) formschlüssig aufgenommen und fixiert ist, wobei die Aufnahme (3) in einem Profilstrang (1) ausgebildet ist, der den Rahmen bildet,
**dadurch gekennzeichnet, dass**
der Profilstrang (1) als Kederschiene aus Aluminium ausgebildet ist, in welcher die Dichtung (2) aufgenommen ist.

2. Filterelement nach Anspruch 1, **dadurch gekennzeichnet, dass** die Dichtung (2) als Strang ausgebildet ist, der formschlüssig in der Aufnahme (3) aufgenommen ist.

3. Filterelement nach einem der voranstehenden Ansprüche, **dadurch gekennzeichnet, dass** die Aufnahme (3) für die Dichtung (2) roh- und/ oder reingasseitig angeordnet ist.

## Claims

1. Filter element (4) designed as a cassette filter for high-temperature applications for air filtration in a temperature range of greater than 100°C to at most 385°C, comprising a frame which is assigned a seal (2), wherein the frame is assigned a receptacle (3) in which the seal (2) is received, and fixed, in a form-fitting manner, wherein the receptacle (3) is formed in a profile strand (1) which forms the frame,
**characterized in that**
the profile strand (1) is in the form of a keder rail composed of aluminium, in which the seal (2) is received.

2. Filter element according to Claim 1, **characterized in that** the seal (2) is in the form of a strand, which is received in a form-fitting manner in the receptacle (3).

3. Filter element according to one of the preceding claims, **characterized in that** the receptacle (3) for the seal (2) is arranged on the raw-gas side and/or on the clean-gas side.

## Revendications

1. Élément filtrant (4) conçu comme un filtre à cassette destiné à des applications à haute température pour la filtration d'air dans une plage de température allant de plus de 100 °C à un maximum de 385 °C, ledit élément filtrant comprenant un cadre auquel est associée une garniture d'étanchéité (2), le cadre étant associé à un logement (3) dans lequel la garniture d'étanchéité (2) est reçue et fixée par complémentarité de formes, le logement (3) étant formé dans une barre profilée (1) qui forme le cadre,
**caractérisé en ce que**
la barre profilée (1) est conçue comme un rail jonc en aluminium dans lequel la garniture d'étanchéité (2) est reçue.

2. Élément filtrant selon la revendication 1, **caractérisé en ce que** la garniture d'étanchéité (2) est réalisée sous la forme d'une barre qui est reçue dans le logement (3) par complémentarité de formes.

3. Élément filtrant selon l'une des revendications précédentes, **caractérisé en ce que** le logement (3) destiné à la garniture d'étanchéité (2) est disposé côté gaz brut et/ou côté gaz purifié.
